# EUROPEAN PATENT APPLICATION

(11) **EP 2 006 175 A2**
(43) Date of publication of application: **24.12.2008**
(21) Application number: 08158455.9
(22) Date of filing: 18.06.2008
(51) Int. Cl.: B60S 3/04, B62H 1/00

(54) **Equipment for cleaning cycles or motorcycles**

(30) Priority: 22.06.2007 IT MI20071251
(71) Applicant: Sistemi Doc S.r.l., 20125 Milano (IT)
(72) Inventor: Galifi, Carlo, 20125 Milano (IT); Capitaneo, Domenico, Sesto San Giovanni (Milano) (IT)
(74) Representative: Baroni, Matteo

(57) **Abstract**

An equipment (1) to wash cycles or motorcycles (3) comprising: a positioning base (2) for at least one cycle or motorcycle (3); a frame (6) associated with that base (2) and defining, in cooperation therewith, a containment chamber (7) for that cycle or motorcycle (3); and a plurality of delivery units (9) associated with the frame (6) to distribute at least one liquid product on that cycle or motorcycle (3); the delivery units (9) are moved by specific adjustment means (15) able to put the liquid product on different parts of the cycle or motorcycle (3).

## Description

The invention relates to an equipment for cleaning cycles or motorcycles.

In particular, the invention is specific to the use for automatic washing of bicycles, motor vehicles with two or three wheels and light 4-wheel cycles.

As known, cycles or motorcycles are washed inside containment structures, usually referred to as "box", properly closed to prevent dispersion into the environment of the washing liquid.

These structures consist of a supporting base for vehicle and a side chassis equipped with nozzles for liquid product delivery. Once vehicle has been positioned inside the containment structure, a liquid distribution system is activated that allows conveyance of same liquid to dispensing nozzles. The cycle or motorcycle is therefore impinged on by a series of jets of washing liquid from nozzles surrounding the motorcycle.

This is normally repeated automatically for a certain number of phases depending on the type of wash and liquid compound to be distributed. For example, a succession of stages can be provided for distribution of a liquid detergent, a series of stages for distribution of rinsing water and a distribution phase for a liquid polishing product (wax).

In addition, concluding washing operations, the cycle or motorcycle undergoes a drying stage, usually implemented by special air blowers.

Such washing equipment shows some limitations, particularly in relation to the distribution of washing liquid.

Note that the jets of liquid generated by nozzles develop along their essentially straight trajectories. Consequently, the delivery nozzles distribute the liquid only in predefined areas of the chamber, providing liquid in a non-homogeneous way on the surface of the vehicle to be washed.

To overcome this drawback, washing equipment is used with a mobile group inside the containment structure, with a series of delivery nozzles.

In particular, the mobile group presents arched conformation defining the two vertical columns arranged on the sides of the vehicle, and a top cross connection with the vertical columns. The vertical columns present a lower portion sliding on longitudinal guides derived on the support base. The movement of the columns is done by a respective electric motor, to allow running of same group around the vehicle.

In this way, moving the group according to a reciprocating motion, the nozzles are translated around the vehicle providing the washing liquid on the entire surface of the same vehicle.

Such equipment, even if able to equally distribute the liquid to the vehicle to be washed, however, has a major drawback.

Indeed, the mobile group is structurally very complicated and cumbersome, especially as regards pipelines for passage of the cleaning liquid to be movable and translatable together with the same mobile group. Also the presence of longitudinal guides and the motor for the movement of the mobile group are structurally complex, with high cost and large space requirements.

Additional drawback is the process of washing, which is particularly long and laborious due to movement time of the mobile group around the vehicle to be washed.

Finally, to ensure proper distribution of the liquid, many nozzles are used throughout the development of the mobile group, with the consequent excessive consumption of washing liquid.

In this situation, the technical task placed at the base of this invention is to design an equipment for cleaning cycles or motorcycles that can substantially overcome mentioned disadvantages.

As part of that technical task, an important goal is the design of an equipment for cleaning cycles or motorcycles that is able to efficiently and homogeneously distribute washing liquid over the entire outer surface of the vehicle to wash.

Additional purpose of this invention is to design an equipment for cleaning cycles or motorcycles that has both reduced cost and encumbering, is structurally simple and at the same time able to optimize the amount of liquid to be distributed.

The stated technical task and the purpose specified are substantially achieved by an equipment for cleaning cycles or motorcycles that is characterized by the fact that it includes the technical solution later claimed.

It is now reported, by way of indicative and not limited example, a description of a preferred but not exclusive form of execution for an equipment for cleaning cycles or motorcycles according to the invention, illustrated in the attached drawings, in which:
- Figure 1 shows a perspective view of the invention in accordance with a corresponding non-operational condition;
- Figure 2 shows a perspective view of the invention in accordance with a respective operating condition;
- Figures 3a, 3b and 3c schematically illustrate a detail of figure 1 in the respective alternative embodiments;
- Figures 4a and 4b respectively illustrate a construction detail of the equipment of figure 1 in corresponding alternative embodiments.

With reference to drawings cited, the equipment for cleaning cycles or motorcycles according to the invention is generally shown with the number 1.

It has to be specified that this invention is preferably used for washing two-wheel motorcycles. However, the equipment 1 may be used to wash bicycles or motor vehicles of any kind, such as three-wheel motorcycles or light four-wheel cycles. It is also specified that, during the description, the word "vehicle" will only refer to cycles or motorcycles of the type specified above. Specifically, the equipment 1 includes a base 2 for positioning of at least one cycle or motorcycle 3.

The base 2 is a horizontal platform with at least one perforated portion 2a for the drain of a washing liquid delivered on cycle or motorcycle 3.

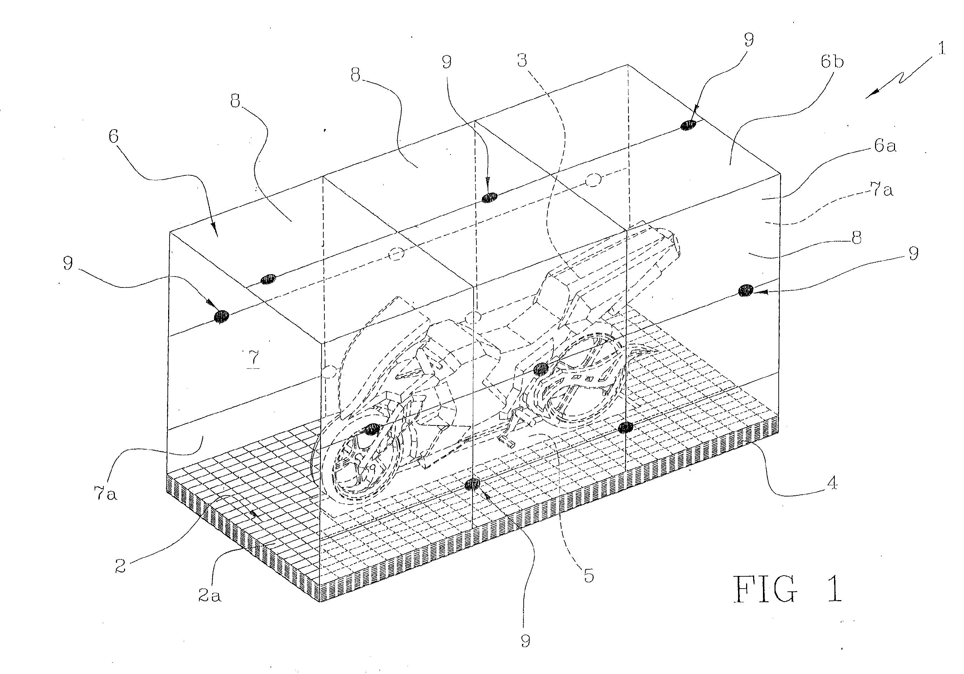

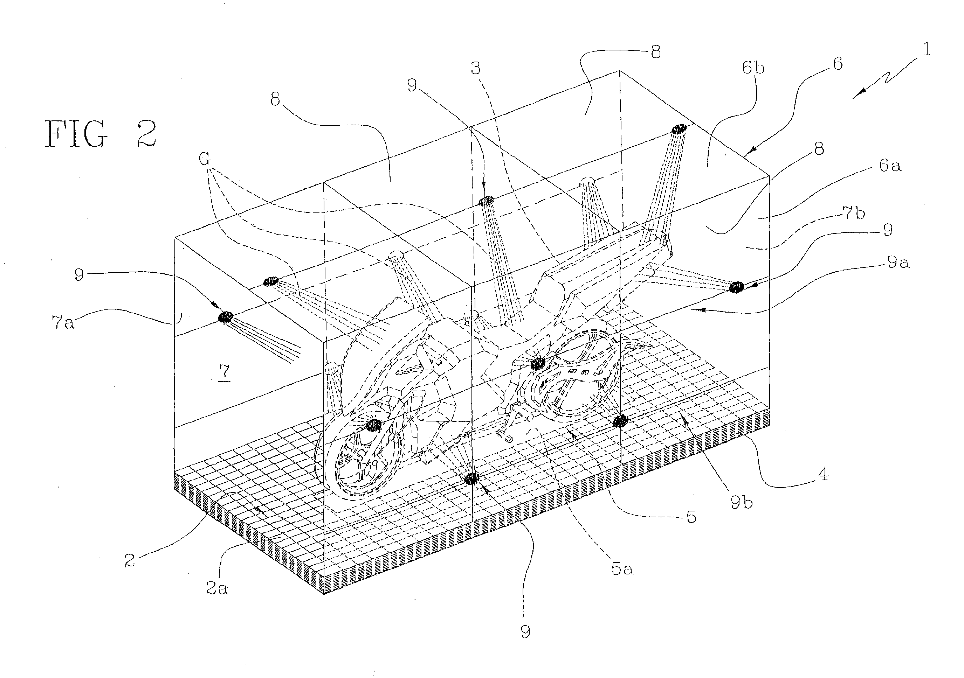

All below the base 2 develops a recovery plant 4 schematically illustrated in figures 1 and 2, able to recover the liquid delivered. Preferably, the recovery plant 4 shows a collection basin and a recirculation pump (not illustrated as of known type) to convey the liquid to a drain pipe or a filtering system in the event that said liquid should be reused.

The base 2 also presents a support portion 5 of cycle or motorcycle 3 that can be held to the wheels of the same to keep it in upright position, as shown in the attached drawing.

The support portion 5 is advantageously equipped with a reception space 5a of at least one wheel of the vehicle 3, that can be obtained at the base 2 in a disappearing form or may protrude above the base 2 itself. Profitably, the reception space 5a is associated with a locking/release system, of the type known and therefore not described in further detail, of the pneumatic or mechanical type, manually activated by the operator who moves the vehicle 3 above or outside the base 2.

The equipment 1 presents a frame 6 associated with base 2 and defining, in cooperation with the same, one containment chamber 7 for the cycle or motorcycle 3.

In particular, the frame 6 includes a pair of side walls 6a facing each other, and arranged alongside the cycle or motorcycle 3, and a top wall 6b as crossmember with the side walls 6a, and positioned above the base 2.

In this situation, note that the chamber 7 presents at least one opening 7a, adjacent to the side walls cited 6a, for entry and exit of the vehicle. Advantageously, the equipment 1 has two openings for entry and exit 7a, 7b opposing one another to allow the vehicle to be introduced into and extracted from chamber 7 by moving it along a single direction.

Still, every wall 6a, 6b includes at least two modular sectors 8 moveably associated with one another to define the wall 6a, 6b. The modular sectors 8, which may be more than two, are easily transportable due to their limited encumbering, and allow the frame 6 to be composed depending on various dimensional requirements that the entire equipment 1 must have.

The side 6a and top 6b walls preferably show flat shape and define their respective continuous areas able to support a variety of delivery units 9 which will be later described in the present description.

Preferably, in accordance with what illustrated in figures 1 and 2, each wall 6a, 6b includes at least one set of units 9 aligned along a direction parallel to a longitudinal axis of the cycle or motorcycle 3.

In other words, the direction along which the units 9 are arranged is preferably horizontal, i.e. parallel to the positioning base 2.

In more detail, each side wall 6a includes a first set 9a and a second set 9b of delivery units 9 in parallel to each other. Note that the units 9 of the first set 9a are staggered compared to the units 9 of the second set 9b. It has to be also specified that the number of units 9 of each set can be any, depending on the size of the equipment 1 and the various washing needs. Indeed, in the attached drawings side walls 6a each having five delivery units 9 and a top wall 6b having three units 9 are illustrated by way of example only, and therefore not for limiting purposes. However, as mentioned, the walls are designed to support any number of units 9.

Each unit 9 is able to distribute a fluid inside the chamber 7 such as water and/or a compound detergent or a polishing compound (wax) or osmotic water used particularly for the rinsing stage. The fluid can be semi-liquid, in the form of an emulsion or foam.

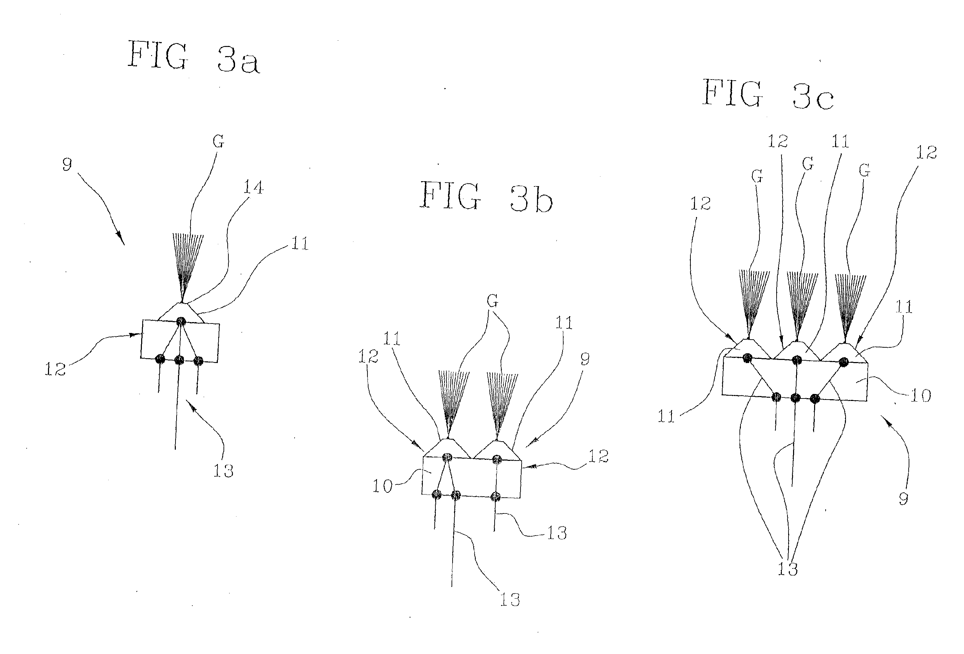

As it is schematically shown in figures 3a, 3b and 3c, each unit 9 includes a first portion 10, preferably in engagement with the frame 6, and a second portion 11 associated with the first portion 10 and movable with respect to it so as to be adjustable. In this way, the unit 9 addresses at least one jet "G" of fluid towards different parts of the chamber 7 and consequently on different portions of the cycle or motorcycle 3.

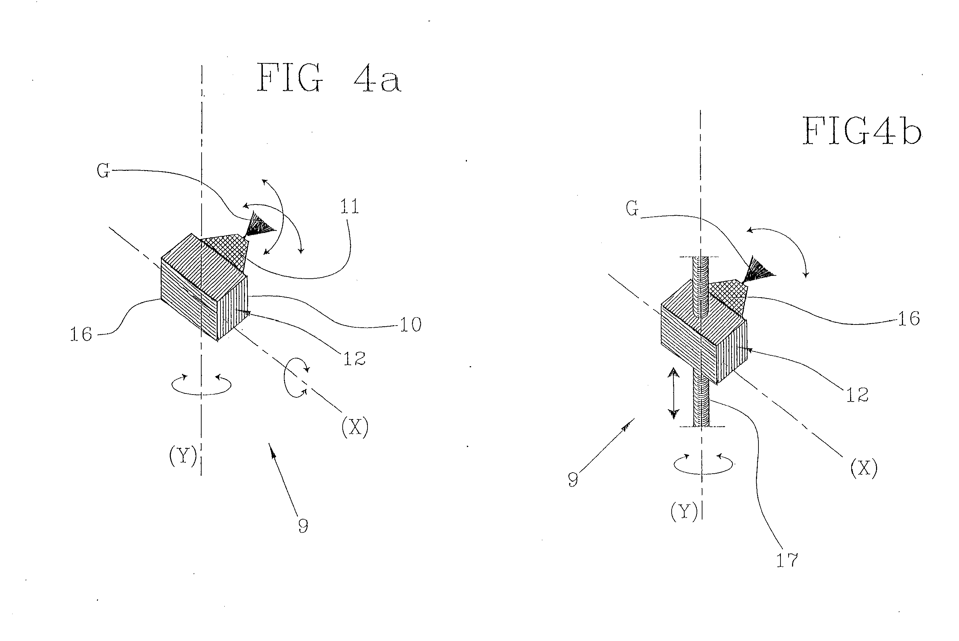

With particular reference to figure 4a, it should be noted that the second portion 11 of each delivery unit 9 is moving around a horizontal axis "X" parallel to the ground, and around a vertical axis "Y" perpendicular to the horizontal one "X". This movement can occur in a simultaneous or alternative way, as will be later explained, to guide the cited jet "G" during the delivery of fluid (figure 2).

Preferably, the axis "X" is defined in the direction along which the units 9 of the same set are aligned.

Alternatively, according to the illustration 4b, the unit 9 can be moveable along the vertical axis "Y" and revolving around the same axis "Y". In this solution, each unit 9 can be raised or lowered depending on the area where the jet "G" needs to be directed.

Advantageously, every delivery unit 9 is made up of a dispenser 12 possessing said first and second portions 10, 11.

As is illustrated in the first embodiment of figure 3a, the first portion 10 of the dispenser 12 is associated with a leading pipe 13 for fluid distribution. In this case, the pipe 13 has three different branches, each one of which is dedicated to a cleaning fluid, a polishing fluid (wax) and osmotic water.

The second portion 11 is equipped with a passage opening 14 for the fluid jet in communication with the distribution pipe 13. In this solution, the dispenser 12 is prepared to provide the three mentioned liquids, in a selective manner, through appropriate selection valves.

In the embodiment in figure 3b, the unit 9 includes two dispensers 12, each of them having a first portion 10 in common and a respective second portion 11.

In this solution, a first dispenser 12 presents a respective pipe 13 consisting of two branches corresponding to the polishing fluid and the fluid detergent, while a second dispenser has a single pipe dedicated to osmotic water.

In this solution, the latter portions 11 of the dispenser 12 can simultaneously move or have a movement independent of each other.

In the embodiment in figure 3c, the unit 9 includes three dispensers 12 associated with respective liquids to be delivered. In this solution, each dispenser 12 is associated with a respective distribution pipe 13 of a corresponding fluid. In other words, each opening 14 of the respective second portion 11 is devoted to delivery of a single fluid product.

Again the latter portions 11 of dispenser 12 can be moved independently or simultaneously around the mentioned axes.

Preferably, the Applicant has found that dispensers 12 of the type with opening 14 having diameter between 1 and 2 mm and jet "G" angle between 45 ° and 60 °, show characteristics suitable to deliver the fluid in the side area of cycle or motorcycle 3.

Regarding the upper zone of the cycle or motorcycle 3, dispensers 12 with opening 14 of diameter between 1 and 5 mm and jet "G" angle between 70 ° and 130 ° can preferably be used.

The equipment 1 also includes an adjustment means 15 for the orientation of one or more units 9.

The adjustment means 15 include at least one translation body 16 operatively associated with the second portion 11 of at least one unit 9, to move the second portion 11 itself during the delivery of fluid. In this way, a plurality of directions of jet "G" of the fluid product are made which mutually diverge from the second portion.

The translation body 16 can be associated with a single delivery unit 9 for the addressing of jet "G" in any requested direction, regardless of other units 9. Alternatively, the body 16 can be in engagement with each unit 9 of at least one of said sets.

For example, rotation of units 9 around the horizontal axis "X" can be imposed to all units 9 simultaneously, to make their respective vertical movements simultaneous.

According to the embodiment in figure 4b, the adjustment means 15 also include at least one lifting body 17 operatively associated with the first portion 10 of a respective unit 9, for handling the same unit 9 along the vertical axis "Y" preferably between an initial location where it is prepared at the base 2 and a second position in which it is prepared next to a corresponding zone of the upper part of chamber 7.

The lifter 17 may be, for example, made up of an endless screw extending along the vertical axis "Y" to raise/lower the respective compass associated with the first portion 10 of dispenser 12. In this case, the translation body 16 allows the rotation of the second portion 11 just around said vertical axis "Y".

The body 16 can consist of an electric motor (for example, of the step-by-step type) or a fluid-operated actuator, both types known and therefore not described in further detail.

In a possible embodiment, an "X" shaped structure is located at the exit opening 7b of the containment chamber 7; the plane on which the "X" structure extends is transverse, and preferably perpendicular, to the side walls 6a of the frame 6, so as to substantially close the exit opening 7b.

The body 16 is connected to a central rotating member mounted substantially at the centre of the "X" shaped structure; through one or more mechanisms comprising a crank and a connecting rod, the movement of the body 16 is transferred to the axes which support the units 9.

In particular, such axes are engaged at the distal ends of the 4 arms which form the "X" shaped structure.

According to another embodiment, one translation body 16 is provided at each side 6a of the frame 6.

Each translation body 16 provides a substantially linear movement, which is preferably substantially vertical (i.e. substantially perpendicular to the base 2).

A couple of axes is provided for each side 6a. Each body 16 is active on the units 9 mounted on each couple of axes so as to move the same.

Proper mechanisms are interposed between each translation body 16 and the second portions 11 of units 9 in order to transform the linear movement of the translation body 16 into a rotational movement.

Preferably, the second portions 11 of units 9 are rotated on a plane which substantially perpendicular to the side walls 6a; such second portions 11 are thus moved by an angle comprised between 20° and 60°, and for example equal to about 45°.

Advantageously, this embodiment does not prevent any closing elements at the exit opening 7b of the containment chamber 7, so as to allow the vehicle to be introduced into and extracted from chamber 7 by moving it along a single direction.

According to a further embodiment, at each side 6a of the frame 6, one movable structure is provided.

Each movable structure comprises a couple of horizontal shafts and a couple of vertical shafts, so as to form a substantially rectangular frame.

The vertical distance between the two horizontal shafts can be comprised, for example, between 20cm and 80cm, preferably between 30cm and 70cm.

For example, the distance between the two horizontal shafts can be substantially equal to 50cm.

Each movable structure can be translated along a vertical direction, for example through a hydraulic motor.

Preferably, each movable structure is vertically moved so that the upper shaft reaches an height substantially equal to 110cm when the movable structure is at its upper end position, and the lower shaft reaches an height substantially equal to 10cm when the movable structure is at its lower end position.

The units 9 are mounted on the horizontal shafts.

Preferably, the movable structures can be moved also along the horizontal direction, preferably substantially parallel to the longitudinal axis of the chamber 7.

Preferably, whereas the movable structures are moved along the vertical direction, the second portions 11 of units 9 are rotated on a horizontal plane, so as to completely wash the vehicle even if the horizontal movement of the movable structures is not performed.

The handling of those units 9 is regulated by an electronic management unit 18, such as a well-known PLC, which would coordinate the orientation of units 9 during washing of the cycle or motorcycle 3.

In addition, the electronic unit 18 is able to determine one or more of the following parameters: temperature of the fluid, the fluid pressure and the amount of fluid to be delivered in the containment chamber 7.

Still, the electronic unit 18 will cause selective activation of the delivery unit 9 as a function of a time sequence for distribution of fluid.

For example a wash cycle may be foreseen in which some units 9 are activated and deactivated in a sequential manner, so as to carry out washing only on certain parts of the vehicle. Moreover, if the cycle or motorcycle 3 is small, you can only use some of those units 9 for a greater economy of the cleaning fluid. Profitably, guidance for orientation of units 9 takes place simultaneously with the delivery stage of the fluid so as to have a continuous and uniform distribution of jet "G" on the vehicle.

A sequence of operational steps performed by unit 9 for washing a cycle or motorcycle 3 is listed in the following:
- Pre-wash with detergent and hot water;
- First rinse with cold water;
- First washing with detergent and hot water;
- Second rinse with cold water;
- Second washing with detergent and hot water;
- Third rinse with cold water;
- Polishing fluid delivery (wax);
- Rinse with osmotic -water.

Following these steps the vehicle may undergo a further drying phase done by hand or with special blowers not described and illustrated as of known type.

Note that, during the above steps, the adjustment means 15 shall guide the unit 9 for covering all areas of the vehicle.

In addition, these steps can be changed in their sequence or in their time of delivery depending on how much dirt is to be removed, and depending on the vehicle to be cleaned.

Profitably, the equipment 1 allows for homogeneous distribution of washing fluid over the entire vehicle. Indeed, the handling of dispensers 12 permits impinging of jet "G" on all areas of chamber 7 and consequently all parts of the vehicle 3 to be cleaned. Moreover, the equipment 1 is structurally simple and economical, and does not present bulky mechanical parts moving around the vehicle to be cleaned.

Finally, the amount of water and cleaning fluid to be distributed on the vehicle is optimised. This advantage results from the ability to selectively operate dispensers 12 and the possibility of covering more areas of the vehicle 3 with a single jet "G".

## Claims

1. Equipment for cleaning cycles or motorcycles including:
- a positioning base (2) of at least one cycle or motorcycle (3);
- a frame (6) associated with that base (2) and defining, in cooperation therewith, a containment chamber (7) of that cycle or motorcycle (3);
and
- a plurality of delivery units (9) associated with the frame (6) to distribute at least one fluid on that cycle or motorcycle (3);
**characterized by** the fact that it includes adjustment means (15) for movement of one or more delivery units (9) with respect to said frame (6).

2. Equipment according to the previous claim, **characterized by** the fact that each delivery unit (9) comprises a first portion (10) and a second portion (11) associated with the first portion (10) and movable with respect to it, so as to be swivelling in order to direct a fluid jet (G) towards different parts of the cycle or motorcycle (3).

3. Equipment according to the previous claim, **characterized by** the fact that the second portion (11) is moving around a horizontal axis (X) parallel to the ground and a vertical axis (Y) perpendicular to said horizontal axis (X).

4. Equipment according to claim 2, **characterized by** the fact that said delivery unit (9) may move along a vertical axis (Y); said second portion (11) also being able to rotate around said vertical axis (Y).

5. Equipment according to any of claims 2 to 4, **characterized by** the fact that said adjustment means (15) include at least one movement body (16) operatively associated with the second portion (11) of at least one delivery unit (9) so as to move the second portion (11) during the delivery of fluid; handling caused by that movement body (16) defining a plurality of directions of the fluid jet (G) mutually diverging from the second portion (11).

6. Equipment according to the previous claim when depending on claim 4, **characterized by** the fact that said adjustment means (15) also include at least one lifting body (17) operatively associated with said first portion (10) to move the delivery unit (9) along said vertical axis (Y).

7. Equipment according to claim 5 **characterized by** the fact that said movement body (16) includes an electric motor.

8. Equipment according to claim 5 **characterized by** the fact that said movement body (16) includes a fluid-operated actuator.

9. Equipment according to any of claims 5 to 8, **characterized by** the fact that said adjustment means (15) include one movement body (16) for each delivery unit (9).

10. Equipment according to any of claims 5 to 8, **characterized by** the fact that said adjustment means (15) include one movement body (16) associated with each delivery unit (9) belonging to the same set.

11. Equipment according to any of claims 5 to 10, **characterized by** the fact that each delivery unit (9) includes a dispenser (12) presenting said first portion (10) associated with a distribution pipe (13) for fluid, and said second portion (11) with a passage opening (14) for the fluid jet in fluid communication with the distribution pipe (13).

12. Equipment according to any of claims from 5 to 10, **characterized by** the fact that each delivery unit (9) includes a plurality of dispensers (12) associated with respective liquids to be delivered; each dispenser (12) presenting said first portion (10) associated with a distribution pipe (13) for the respective fluid, and said second portion (11) with a passage opening (14) for the respective fluid jet (G) in fluid communication with the distribution pipe (13).

13. Equipment according to any one of the previous claims, **characterized by** the fact that said frame (6) includes a pair of side walls (6a) arranged alongside the cycle or motorcycle (3) and an upper wall (6b) for connection with said side walls (6a), and arranged above said cycle or motorcycle (3); each wall (6a, 6b) comprising at least one set of delivery units (9).

14. Equipment according to the previous claim, **characterized by** the fact that said delivery units (9) of a respective set are arranged along a line parallel to a longitudinal axis of the cycle or motorcycle (X).

15. Equipment according to claim 14, **characterized by** the fact that each side wall (6a) includes a first and a second set (9a, 9b) of delivery units (9) parallel to each other; said units (9) of the first set (9a) being preferably staggered compared to the units (9) of the second set (9b).

16. Equipment according to any of claims 13 to 15, **characterized by** the fact that every wall (6a, 6b) includes at least two modular sectors (8), moveably associated with one another to define the wall itself (6a, 6b).

17. Equipment according to any of the previous claims, **characterized by** the fact that it also includes a recovery system (4) of the fluid delivered on the cycle or motorcycle (3), arranged below the base (2); said base (2) comprising at least one drilled portion (2a) to drain the fluid delivered on the cycle or motorcycle (3).

18. Equipment according to any of the previous claims, **characterized by** the fact that the base (2) includes a supporting portion (5) of the cycle or motorcycle (3) that may engage the wheels of the cycle or motorcycle (3) to keep it in a vertical position.

19. Equipment according to the previous claim, wherein the movement of said one or more delivery units (9) comprises a change of the orientation of said one or more delivery units (9) with respect to said frame (6).

20. Equipment according to any one of the previous claims, wherein the movement of said one or more delivery units (9) comprises a translation movement with respect to said frame (6).

21. Equipment according to any one of the previous claims, **characterized by** the fact that it also includes an electronic management unit (18) to determine one or more of the following parameters: temperature of the fluid, the fluid pressure and the amount of fluid to be delivered into said containment chamber.

22. Equipment according to the previous claim, **characterized by** the fact that said electronic unit (18) is operatively associated with said adjustment means (15) to determine the selective activation of the same and the handling of each delivery unit (9) according to a time sequence for distribution of the fluid.

23. Method for cleaning cycles or motorcycles comprising the steps of:
- establishing a containment chamber (7) of at least one cycle or motorcycle (3) defined by a positioning base (2) of that cycle or motorcycle (3) and a frame (6) associated with the base (2);
and
- delivering a fluid product on the cycle or motorcycle (3) positioned in that chamber (7) through a variety of delivery units (9) for the fluid;
**characterized by** the fact that it also includes the stage of moving one or more delivery units (9) with respect to the frame (6) so as to direct a jet of fluid (G) towards different parts of the cycle or motorcycle (3).

24. Method according to the previous claim, **characterized by** the fact that the phase of moving one or more delivery units (9) occurs simultaneous with the stage of delivering the fluid product.
